# EUROPÄISCHE PATENTANMELDUNG

(11) **EP 1 231 133 A2**
(43) Veröffentlichungstag der Anmeldung: **14.08.2002**
(21) Anmeldenummer: 02000331.5
(22) Anmeldetag: 04.01.2002
(51) Int. Cl.: B62J 27/00

(54) **Oberkörper-Rückhalteeinrichtung für Motorräder**

(30) Priorität: 07.02.2001 DE 10105459
(71) Anmelder: Bayerische Motoren Werke Aktiengesellschaft, 80809 München (DE)
(72) Erfinder: Rank, Johann, 85301 Sünzhausen (DE)

(57) **Zusammenfassung**

Die Erfindung betrifft eine Oberkörper-Rückhalteeinrichtung für Motorräder mit einem durch einen Gasgenerator aufblasbaren Gassack, der vor dem Aufsassen auf einem Karosserieteil des Motorrades angeordnet ist. Eine den zusammengefalteten Gassack (5) verdeckende Abdeckplatte (6) ist an ihrem dem Aufsassen zugekehrten Ende um eine quer zur Längsachse des Motorrades verlaufende Achse (7) schwenkbar an dem Karosserieteil (1) befestigt. Die Abdeckplatte (6) ist nach oben gewölbt und in ihrer aktivierten Stellung arretierbar; sie hat eine solche Länge, daß sie in ihrer aktivierten Stellung nicht über die Brust eines besonders kleinen Aufsassen hinausragt. Der Gassack (5) ragt im aufgeblasenen Zustand über die Oberkante der Abdeckplatte (6) hinaus.

## Beschreibung

Die Erfindung betrifft eine Oberkörper-Rückhalteeinrichtung für Motorräder mit einem durch einen Gasgenerator aufblasbaren Gassack, der vor dem Aufsassen auf einem Karosserieteil (Tank) des Motorrades angeordnet ist.

Bekannte Oberkörper-Rückhalteeinrichtungen dieser Gattung sind mit dem Problem behaftet, daß eine stabile Positionierung des Gassackes im aufgeblasenen Zustand nicht gewährleistet werden kann. Der mit einer solchen Oberkörper-Rückhalteeinrichtung erzielbare Schutz des Aufsassen bei einem Unfall ist daher nur begrenzt.

Für Personenkraftwagen ist bereits eine Knie-Rückhalteeinrichtung mit einem durch einen Gasgenerator aufblasbaren Gassack bekannt (DE-OS 39 08 713), der in der Instrumententafel angeordnet und durch eine als Kniepolster dienende Abdeckplatte verdeckt ist. Diese Abdeckplatte ist an ihrem von dem Insassen abgekehrten Ende um eine quer zur Längsachse des Fahrzeugs verlaufende Achse schwenkbar an der Instrumententafel befestigt. Wenn der Gasgenerator ausgelöst wird, dann schwenkt die Abdeckplatte unter dem von dem Gassack ausgeübten Druck nach unten gegen das Knie des Insassen, und der Gassack tritt durch die zwischen der Instrumententafel und dem hinteren freien Rand der Abdecktafel gebildete Öffnung in den Fahrgastraum aus, bis er an der Brust des Insassen und an der Windschutzscheibe bzw. am Dach des Fahrzeugs zur Anlage gelangt. Der Insasse wird daher von dem aufgeblasenen Gassack zurückgehalten und gegen einen Aufprall auf Teile des Kraftfahrzeugs zuverlässig geschützt. Das Wirkungsprinzip dieser Knie-Rückhalteeinrichtung läßt sich offensichtlich nicht ohne weiteres auf eine Oberkörper-Rückhalteeinrichtung für Motorräder übertragen.

Der Erfindung liegt die Aufgabe zugrunde, die gattungsgemäße Oberkörper-Rückhalteeinrichtung für Motorräder dahingehend weiterzubilden, daß eine stabile Positionierung des aufgeblasenen Gassackes und ein optimaler Schutz des Aufsassen unabhängig von dessen Körpergröße gewährleistet ist.

Erfindungsgemäß wird diese Aufgabe dadurch gelöst, daß eine den zusammengefalteten Gassack verdeckende Abdeckplatte an ihrem dem Aufsassen zugekehrten Ende um eine quer zur Längsachse des Motorrades verlaufende Achse schwenkbar an dem Karosserieteil befestigt ist, daß die Abdeckplatte nach oben gewölbt ist, daß die Abdeckplatte in ihrer aktivierten Stellung selbsttätig arretierbar ist, daß die Abdeckplatte eine solche Länge hat, daß sie in ihrer aktivierten Stellung nicht über die Brust eines besonders kleinen Aufsassen hinausragt, und daß der Gassack im aufgeblasenen Zustand über die Oberkante der Abdeckplatte hinausragt.

Wenn bei einem Unfall der Gasgenerator ausgelöst wird, dann führt der von dem Gassack auf die Abdeckplatte ausgeübte Druck zu einer Verdrehung derselben zum Aufsassen hin. Durch die Wölbung der Abdeckplatte ist gewährleistet, daß zuerst der Beckenbereich und sodann der Brustbereich des Aufsassen mit der sich aufstellenden Abdeckplatte in Berührung kommt. Dies führt zu einem sanften Abfangen des Aufsassen. Durch die selbsttätige Arretierung der Abdeckplatte in ihrer aktivierten Stellung wird verhindert, daß die Abdeckplatte zu weit nach hinten verschwenkt wird und selbst ein Verletzungsrisiko für den Aufsassen darstellt. Die Abdeckplatte hat eine solche Länge, daß auch ein besonders kleiner Aufsasse nicht mit dem Kopf gegen die Oberkante der Abdeckplatte prallen kann. Dadurch, daß der Gassack im aufgeblasenen Zustand über die Oberkante der Abdeckplatte hinausragt, kann aber auch ein besonders großer Aufsasse im gesamten Brustbereich abgestützt und somit optimal geschützt werden.

Zweckmäßigerweise ist die Abdeckplatte über mindestens ein Fangband mit dem Karosserieteil verbunden, wobei das Fangband im Bereich des freien Endes der Abdeckplatte befestigt ist. Durch diese Maßnahme kann über die Biegesteifigkeit der Abdeckplatte deren Krümmung in der aktivierten Stellung optimal eingestellt werden. In dieser Hinsicht ist es auch zweckmäßig, daß die Abdeckplatte vom angelenkten Ende zum freien Ende hin eine abnehmende Steifigkeit aufweist.

Damit die Abdeckplatte im Normalbetrieb gegen eine Verschwenkung gesichert und der Gassack gegen mögliche Beschädigungen geschützt ist, ist gemäß einer zweckmäßigen Weiterbildung der Erfindung vorgesehen, daß die Abdeckplatte am freien Ende durch zerstörbare Befestigungselemente mit dem Karosserieteil verbunden ist.

Ein Ausführungsbeispiel der Erfindung ist in der Zeichnung dargestellt und wird nachfolgend näher erläutert. Es zeigt:
Fig. 1 eine schematische Seitenansicht einer Oberkörper-Rückhalteeinrichtung für Motorräder im Normalzustand, und
Fig. 2 eine Darstellung ähnlich wie Fig. 1, wobei die Rückhalteeinrichtung im aktivierten Zustand gezeigt ist.

In der zeichnerischen Seitenansicht eines Motorrades sind ein Tank 1, eine Sitzbank 2 und eine Windschutzscheibe 3 nur schematisch dargestellt. Der Fahrer oder Aufsasse ist mit dem Bezugszeichen 4 bezeichnet. Auf dem Tank 1 ist ein zusammengefalteter Gassack 5 angeordnet, der mit einem (nicht gezeigten) Gasgenerator verbunden ist. Der Gassack 5 ist von einer Abdeckplatte 6 verdeckt, die an ihrem dem Aufsassen 4 zugekehrten Ende um eine quer zur Längsachse des Motorrades verlaufende Achse 7 an dem Tank 1 schwenkbar befestigt ist. An dem gegenüberliegenden vorderen Ende ist die Abdeckplatte 6 durch Abreißstifte 8 mit dem Tank 1 lösbar verbunden. Am vorderen Ende der Abdeckplatte 6 ist ferner mindesten ein Fangband 9 befestigt, dessen anderes Ende am Tank 1 befestigt ist. Die Abdeckplatte 6 ist nach oben gewölbt, und sie hat eine vom angelenkten hinteren Ende zum vorderen Ende hin abnehmende Steifigkeit.

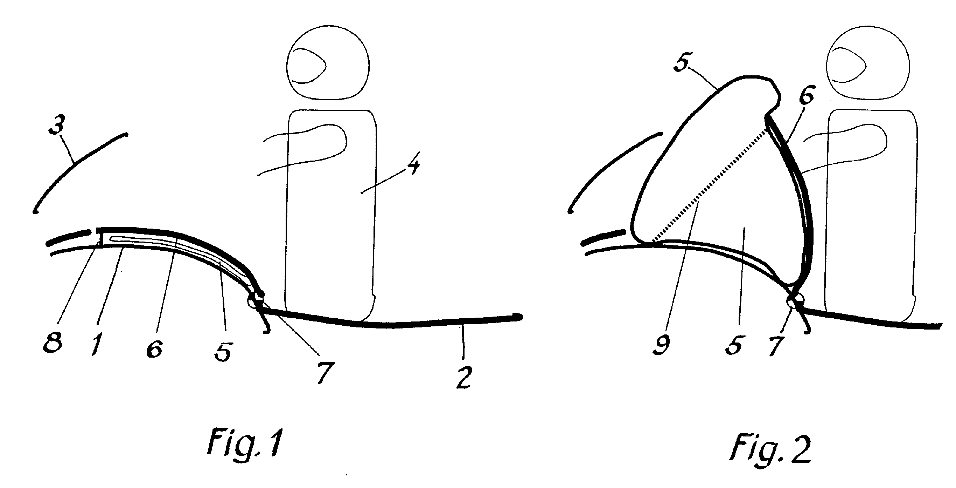

Wenn bei einem Unfall der Gasgenerator gezündet wird, dann strömt in den zusammengefalteten Gassack 5 Gas ein. Sobald der von dem Gassack 5 auf die Abdeckplatte 6 ausgeübte Druck eine bestimmte Kraft übersteigt, werden die Abreißstifte 8 zerstört, und die Abdeckplatte 6 wird um die Schwenkachse 7 zum Aufsassen 4 hin nach oben und nach hinten verschwenkt, bis das oder die Fangbänder 9 gestrafft sind. Diese durch die Länge der Fangbänder 9 bestimmte aktivierte Stellung der Abdeckplatte 6 ist in Fig. 2 gezeigt. Im vollständig aufgeblasenen Zustand ragt der Gassack 5 über die Oberkante der Abdeckplatte 6 hinaus.

Bei einer starken Verzögerung des Motorrades bewegt sich der Aufsasse 4 infolge der Trägheitskraft auf dem Motorrad nach vorne. Wegen der zum Aufsassen 4 hin gekrümmten Form der Abdeckplatte 6 gelangt der Aufsasse zunächst mit dem Beckenbereich und sodann mit dem Brustbereich an der Abdeckplatte 6 zur Anlage. Der Ausasse 4 wird daher durch die Abdeckplatte 6 sanft aufgefangen. Dazu trägt auch der Umstand bei, daß die Steifigkeit der Abdeckplatte 6 vom angelenkten Ende zum freien Ende hin abnimmt. Die Abdeckplatte 6 stützt sich ihrerseits über den aufgeblasenen Gassack 5 am Tank 1 des Motorrades ab. Der Gassack 5 hat eine begrenzte Gasdurchlässigkeit, so daß die Abdeckplatte 6 zunehmend nach vorne verschwenkt werden kann, was eine sanfte Verzögerung des Oberkörpers des Aufsassen 4 ermöglicht.

In Fig. 2 ist ein besonders kleiner Aufsasse 4 dargestellt. Es ist erkennbar, daß die Abdeckplatte 6 nicht über die Brust des Aufsassen 4 hinausragt, so daß keine Gefahr besteht, daß dieser mit dem Kopf gegen die Oberkante der Abdeckplatte prallt. Der Kopf des Aufsassen 4 wird vielmehr durch den nach oben über die Abdeckplatte 6 hinausragenden aufgeblasenen Gassack 5 abgefangen.

Es ist erkennbar, daß auch ein Aufsasse von durchschnittlicher oder überdurchschnittlicher Größe durch die gezeigte Rückhalteeinrichtung optimal geschützt ist, weil sein Oberkörper von der Abdeckplatte 6 in Verbindung mit dem nach oben über diese hinausragenden aufgeblasenen Gassack 5 sanft aufgefangen wird.

### Bezugszeichenliste:

- 1: Tank
- 2: Sitzbank
- 3: Windschutzscheibe
- 4: Aufsasse
- 5: Gassack
- 6: Abdeckplatte
- 7: Schwenkachse
- 8: Abreißstifte
- 9: Fangband

## Patentansprüche

1. Oberkörper-Rückhalteeinrichtung für Motorräder mit einem durch einen Gasgenerator aufblasbaren Gassack, der vor dem Aufsassen auf einem Karosserieteil (Tank) des Motorrades angeordnet ist, **dadurch gekennzeichnet, daß** eine den zusammengefalteten Gassack (5) verdeckende Abdeckplatte (6) an ihrem dem Aufassen zugekehrten Ende um eine quer zur Längsachse des Motorrades verlaufende Achse (7) schwenkbar an dem Karosserieteil (1) befestigt ist, daß die Abdeckplatte (6) nach oben gewölbt ist, daß die Abdeckplatte (6) in ihrer aktivierten Stellung selbsttätig arretierbar ist, daß die Abdeckplatte (6) eine solche Länge hat, daß sie in ihrer aktivierten Stellung nicht über die Brust eines besonders kleinen Aufsassen hinausragt, und daß der Gassack (5) im aufgeblasenen Zustand über die Oberkante der Abdeckplatte (6) hinausragt.

2. Rückhalteeinrichtung nach Anspruch 1, **dadurch gekennzeichnet, daß** die Abdeckplatte (6) über mindestens ein Fangband (9) mit dem Karosserieteil (1) verbunden ist, wobei das Fangband im Bereich des freien Endes der Abdeckplatte befestigt ist.

3. Rückhalteeinrichtung nach Anspruch 2, **dadurch gekennzeichnet, daß** die Abdeckplatte (6) vom angelenkten Ende zum freien Ende hin eine abnehmende Steifigkeit aufweist.

4. Rückhalteeinrichtung nach einem der Ansprüche 1 bis 3, **dadurch gekennzeichnet, daß** die Abdeckplatte (6) am freien Ende durch zerstörbare Befestigungselemente (8) mit dem Karosserieteil (1) verbunden ist.
